# EUROPEAN PATENT APPLICATION

(11) **EP 3 670 239 A1**
(43) Date of publication of application: **24.06.2020**
(21) Application number: 18214506.0
(22) Date of filing: 20.12.2018
(51) Int. Cl.: B60L 1/02, F01N 3/20

(54) **POWER SUPPLY NETWORK AND HYBRID VEHICLE**

(71) Applicant: Vitesco Technologies GmbH, 30165 Hannover (DE)
(72) Inventor: Frederiksen, Finn, 9370 Hals (DK); Hansen, Thomas-Tarp, 9500 Hobro (DK); Bertelsen, Brian Skjold, 9430 Vadum (DK)

(57) **Abstract**

Disclosed is a power supply network (1) for installation in a vehicle, wherein the power supply network (1) is arranged to provide a first supply voltage so as to power electrical loads electrically connected to the power supply network with the first supply voltage. The power supply network (1) is arranged to power an electric load (6) which is configured to be powered with a second supply voltage smaller than the first supply voltage.

Furthermore, disclosed is a vehicle comprising such a power supply network (1) operationally connected to the vehicle.

The power supply network allows a more environmental-friendly operation.

## Description

The present invention relates to a power supply network for installation in a vehicle, wherein the power supply network is arranged to provide a first supply voltage so as to power electrical loads electrically connected to the power supply network with the first supply voltage.

The present invention furthermore relates to a hybrid vehicle, the vehicle comprising such a power supply network operationally connected to the vehicle.

Legislation for combusting engines in vehicles is getting more and more strict. Exhaust gas provided by the combustion engine has to be cleaned via catalysts as much as possible before entering the environment. Performance of the catalyst often increases with temperature. The temperature of the catalyst usually depends on the combustion engine temperature. Thus, within a certain time period after a cold start of the combustion engine, the catalyst may still be too cold to provide optimum performance.

Therefore, a vehicle having a combustion engine sometimes employs an electrically heated catalyst (EHC) so as to electrically heat the catalyst to improve its cleaning effect on exhaust gas provided by the combustion engine less dependent from the combustion engine temperature. Electrically heated catalyst means that the catalyst comprises an electrically powered heating element, like a heating resistor or similar, that is arranged to heat the catalyst.

The combustion engine of a hybrid electric vehicle (HEV) will normally be switched on and off frequently during driving which may not allow the combustion engine itself to heat up an exhaust system and the catalyst to optimum performance. However, EHCs up to now cannot be employed in hybrid electric vehicles easily as known power supply networks installed in hybrid electric vehicles usually provide a supply voltage of about 350 VDC while a EHC typically needs to be powered with between 10 VDC to 50 VDC, for example 12 VDC or 48 VDC.

An object of the invention is to provide a power supply network and a vehicle comprising such a power supply network operationally connected to the vehicle which are improved over prior art. More specifically, the power supply network and the vehicle shall allow a more environmental-friendly operation.

The object is solved by the power supply network described in the outset in which the power supply network is arranged to power an electric load which is configured to be powered with a second supply voltage smaller than the first supply voltage.

This has the effect that a single power supply network can be used in the vehicle to power electrical loads having supply voltage demands different from each other. It is in other words not necessary to provide several independent power supply networks, each for example having a battery providing an individual supply voltage different from each other. Furthermore, it is, for example, not necessary anymore to abstain from low-voltage applications in hybrid electric vehicles as they now may be powered from the usually already provided high-voltage power supply network. Thus, the power supply network allows a more environmental-friendly operation.

Preferred embodiments form part of the dependent patent claims.

Preferably, the power supply network comprises a converter arrangement arranged to convert the first supply voltage to the second supply voltage. The converter arrangement is thus preferably operationally connected to the power supply network. Having a converter arrangement allows to downconvert the first supply voltage to the second supply voltage which is smaller than the first supply voltage in an easy manner so as to power the electric load which is configured to be powered with the second supply voltage from the power supply network.

It is preferred that the power supply network comprises a first power subnet arranged to provide the first supply voltage and a second power subnet arranged to provide the second supply voltage, the first power subnet and the second power subnet being operationally connected to each other via the converter arrangement. Preferably, the converter arrangement comprises an inverter so as to convert the first supply voltage to the second supply voltage. The inverter may comprise one or more transformer windings. It is preferred that the inverter comprises one primary transformer winding to receive the first supply voltage and at least one secondary transformer winding to provide the second supply voltage downconverted from the first supply voltage. It is preferred that an amount of transformer windings of the primary transformer winding is larger than an amount of transformer windings of each secondary winding so as to downconvert the first supply voltage to the second supply voltage. Preferably, the power supply network comprises a high-voltage battery electrically connected to the first power subnet. The inverter is thus preferably arranged to convert the first, comparably higher, supply voltage provided by the high-voltage battery to the first power subnet into the second, comparably smaller, supply voltage and to provide the second supply voltage to the second power subnet.

Preferably, the primary transformer winding is part of the first power subnet and the at least one secondary transformer winding is part of the second power subnet. Preferably, the primary transformer winding is arranged side-by-side with the at least one secondary transformer winding in order to convert the first supply voltage to the second supply voltage via a magnetic field established between the primary transformer winding and the at least one secondary transformer winding. Inverters are well-known from other electronic applications and may thus easily be integrated into the present solution.

In some embodiments, the inverter is configured to control, preferably activate and deactivate, the conversion from the first supply voltage to the second supply voltage. Preferably, to this end the inverter comprises a switch. As mentioned above, the electrically heated catalyst may not need the same amount of electrical heating all the time. Therefore, it may be useful to control the amount of electricity supplied, for example linearly, or at least to activate or deactivate the supply of the second supply voltage via the inverter on demand. Therefore, a preferred switch has an activate-position and a deactivate-position. A further preferred switch instead has a linear scale so as to linearly control the amount of second supply voltage supplied.

The power supply network may comprise a control unit to control the inverter so as to control the conversion from the first supply voltage to the second supply voltage. The control unit itself may be supplied with the second supply voltage from the second power subnet or from the transformer winding within the inverter so as to power the control unit. Preferably, the inverter comprises an extra secondary transformer winding to power the control unit. Then there is preferably a secondary transformer winding to power the second voltage subnet and the electrical loads connected thereto and the extra secondary transformer winding to power the control unit. Thus, to be powered, the control unit can either be electrically connected to the second power subnet or directly to the extra secondary transformer winding. In other embodiments, the control unit may be supplied with the first supply voltage from the first supply subnet.

Preferably, the power supply network comprises a capacitor. It is preferred that the capacitor is arranged to be charged from the first power subnet. Preferably, the capacitor is arranged to provide the second supply voltage to the second power subnet. It is preferred that the capacitor is arranged in the second power subnet. Preferably, the capacitor is a super capacitor. Preferably, a subnet switch is arranged in the second power subnet to open and close a circuit forming the second power subnet. When the circuit is closed, a current provided by the capacitor may flow through the second power subnet so as to power the electrical loads connected thereto. When on the other hand the circuit is open, the capacitor will be charged. This allows, for example, to provide the second supply voltage for a short time period. The subnet switch itself may be supplied from the extra secondary transformer winding of a transformer, for example provided by the inverter.

In some embodiments, the first supply voltage is 350 VDC and the second supply voltage is between 10 VDC and 50 VDC. Accordingly, a preferred high-voltage battery is a 350 VDC high-voltage battery. A 350 VDC power supply network is often provided in HEVs while 10 VDC to 50 VDC is often needed for electronic appliances like EHCs, more specifically about 12 VDC or about 48 VDC. Therefore, a power supply network providing such two supply voltages can be highly advantageous.

The power supply network preferably comprises an electrically heated catalyst configured to be powered with the second supply voltage. The EHC is thus a highly preferred electrical load which is configured to be powered with the second supply voltage. It is highly advantageous to power an EHC at a second supply voltage of about 12 VDC or about 48 VDC, powered from a power supply network originally providing a first supply voltage of about 350 VDC, preferably in a HEV.

Furthermore, the object is solved by the vehicle described in the outset in which the power supply network is arranged to power an electric load which is configured to be powered with a second supply voltage smaller than the first supply voltage.

This has the effect that a single power supply network can be used in the vehicle to power electrical loads having supply voltage demands different from each other. It is in other words not necessary to provide several independent power supply networks, each for example having a battery providing an individual supply voltage different from each other. Furthermore, it is, for example, not necessary anymore to abstain from low-voltage applications in hybrid electric vehicles as they now may be powered from the usually already provided high-voltage power supply network. Thus, the power supply network allows a more environmental-friendly operation.

Preferred embodiments form part of the dependent patent claims.

Preferably, the power supply network comprises a first power subnet arranged to provide the first supply voltage and a second power subnet arranged to provide the second supply voltage. It is preferred that the first power subnet and the second power subnet are operationally connected to each other via a converter arrangement. The converter arrangement preferably comprises an inverter so as to convert the first supply voltage to the second supply voltage. The inverter may comprise one or more transformer windings. It is preferred that the inverter comprises one primary transformer winding to receive the first supply voltage and at least one secondary transformer winding to provide the second supply voltage downconverted from the first supply voltage. Preferably, the power supply network comprises a high-voltage battery electrically connected to the first power subnet. The inverter is thus preferably arranged to convert the first, comparably higher, supply voltage provided by the high-voltage battery to the first power subnet into the second, comparably smaller, supply voltage and to provide the second supply voltage to the second power subnet. Inverters are well-known from other electronic applications and may thus easily be integrated in the present solution.

It is preferred that the vehicle is a hybrid electric vehicle. A 350 VDC power supply network is often provided in HEVs while 10 VDC to 50 VDC is often needed for electronic appliances like EHCs, more specifically about 12 VDC or about 48 VDC. Therefore, a power supply network providing such two supply voltages can be highly advantageous.

Preferably, the vehicle comprises an electrically heated catalyst configured to be powered with the second supply voltage. The EHC is thus a highly preferred electrical load which is configured to be powered with the second supply voltage. It is highly advantageous to power an EHC at a second supply voltage of about 12 VDC or about 48 VDC, powered from a power supply network originally providing a first supply voltage of about 350 VDC, preferably in a HEV.

Further embodiments of the vehicle and their advantages follow from the description above regarding the power supply network.

In the following, embodiments of the invention will be described in detail merely by way of example and with reference to the attached figures in which:
Fig. 1 schematically shows a first embodiment of the power supply network according to the invention; and
Fig. 2 schematically shows a second embodiment of the power supply network according to the invention.

The following detailed description of exemplaric embodiments, the attached figures, and the attached patent claims which define the scope of the invention comprise reference numerals. The reference numerals are merely introduced to improve readability and are in no way meant to be limiting.

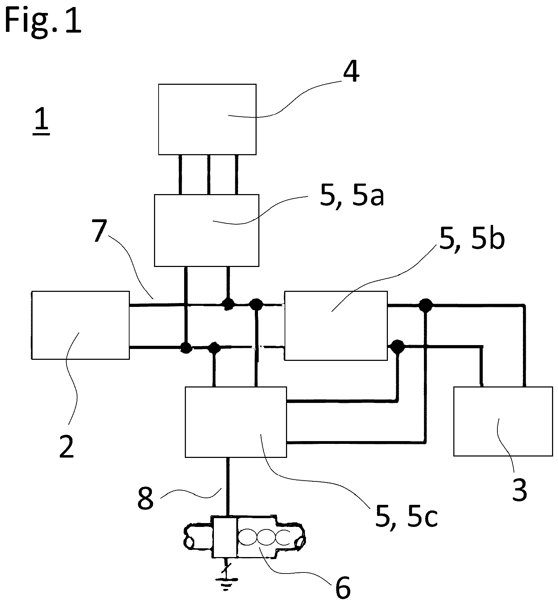

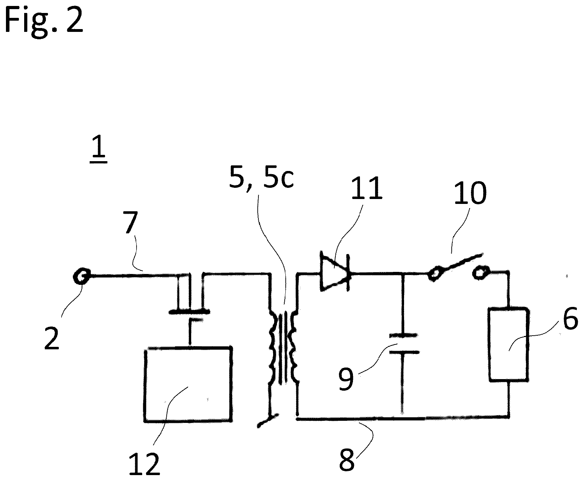

Fig. 1 schematically shows a first embodiment of the power supply network 1 according to the invention. The power supply network 1 is installed in a hybrid electric vehicle. Many details of the hybrid electric vehicle are omitted so as to simplify the description. The power supply network 1 comprises a high-voltage battery 2 providing 350 VDC, a low-voltage battery 3, and an electric machine 4. Furthermore, the power supply network 1 comprises a converter arrangement 5a, 5b, 5c which comprises an AC/DC-inverter 5a for powering the electric machine 4, a DC/DC-converter 5b for powering a vacuum pump (not shown) and a power steering (not shown), and an inverter 5c for powering an electrically heated catalyst (EHC) 6. A wiring between the components follows schematically from fig. 1. Details about the inverter 5c for powering the EHC 6 will be disclosed with more detail below referring to Fig. 2.

As shown, the power supply network 1 is arranged to provide a first supply voltage, from the 350 VDC high-voltage battery 2, so as to power electrical loads electrically connected to the power supply network 1 with the first supply voltage.

Furthermore, the power supply network 1 is arranged to power the EHC 6, the EHC 6 being an electric load configured to be powered with a second supply voltage smaller than the first supply voltage. In the exemplaric case given, the EHC 6 needs to be powered with 12 VDC only while the high-voltage battery 2 only provides the first supply voltage of 350 VDC. Accordingly, the power supply network 1 comprises the converter arrangement 5, in particular the inverter 5c, arranged to convert the first supply voltage to the second supply voltage.

More specifically, the power supply network 1 comprises a first power subnet 7 arranged to provide the first supply voltage and a second power subnet 8 arranged to provide the second supply voltage. The first power subnet 7 and the second power subnet 8 are operationally connected to each other via the converter arrangement 5, in particular via the inverter 5c.

The inverter 5c comprises a switch (not shown). Thereby, the inverter 5c is configured to control the conversion from the first supply voltage to the second supply voltage. The switch comprises an activate-position in which the switch is closed. The switch comprises a deactivate-position in which the switch is open. When the switch is open, the first supply voltage, 350 VDC, will not be converted to the second supply voltage, 12 VDC, and thus the second supply voltage will not be provided to the EHC 6. The heating of the EHC 6 is thus deactivated. When the switch is closed, the first supply voltage is converted to the second supply voltage and thus the second supply voltage is provided to the EHC 6. The heating of the EHC 6 is thus activated.

Fig. 2 schematically shows a second embodiment of the power supply network 1 according to the invention. The power supply network 1 again is installed in a hybrid electric vehicle. The power supply network 1 here comprises a capacitor 9. The capacitor 9 is arranged to be charged from the first power subnet 7, namely by the high-voltage battery 2, and is arranged to provide the second supply voltage to the second power subnet 8. To achieve this, the inverter 5c is configured to step down the 350 VDC provided by the high-voltage battery 2 to, in this case, 48 VDC supply voltage for the EHC 6. The wiring of the components follows from Fig. 2.

As can be seen from Fig. 2, the inverter 5c comprises, as well as in the first embodiment shown in Fig. 1, a primary transformer winding which is part of the first power subnet 7 and a secondary transformer winding which is part of the second power subnet 8. As the inverter 5c thus operationally connects the first power subnet 7 to the second power subnet 8 while not establishing a wired connection between the high-voltage battery 2 and the EHC 6, the EHC 6 can be protected from overvoltage so as to increase electric safety for the second power subnet 8.

The inverter 5c in Fig. 2 is arranged to receive the first supply voltage from the high-voltage battery 2 via the first power subnet 7 and to provide the second supply voltage to the second power subnet 8 which comprises the capacitor 9. The second power subnet 8 comprises a subnet switch 10 to selectively open and close a circuit through the second power subnet 8. When the subnet switch 10 is open, the capacitor 9 is charged from the first power subnet 7 via the inverter 5c. When the subnet switch 10 is closed, the capacitor 9 discharges and supplies the energy stored in the capacitor 9 earlier to the EHC 6. Once the capacitor 9 is discharged, the subnet switch 10 needs to be opened again in order to charge the capacitor 9 via the inverter 5c and so on.

The second power subnet 8 in Fig. 2 comprises a diode 11 which is mounted so as to prevent current flow from the capacitor 9 back to the inverter 5c. Therefore, the energy stored on the capacitor 9 may only serve to supply the electric loads provided in the second power subnet 8 with the second supply voltage. Therefore, here again the second supply voltage will power a heating element, for example a heating resistor, of the EHC 6 so as to electrically heat the EHC 6, independently from combustion engine heat.

According to Fig. 2, the capacitor 9 is arranged electrically in parallel to the inverter 5c. The EHC 6 is arranged electrically in parallel to the capacitor 9. The EHC 6 is arranged electrically in parallel to the inverter 5c. The diode 11 is arranged electrically in series between the inverter 5c and the capacitor 9. The subnet switch 10 is arranged electrically in series between the capacitor 9 and the EHC 6. The first power subnet 7 in Fig. 2 comprises a control unit 12 which is thus supplied with the first supply voltage. The control unit 12 is configured to control the subnet switch 10.

As the person skilled in the art will appreciate, a third embodiment (not shown) is established just by omitting the capacitor 9, the subnet switch 10, and the diode 11 from the second power subnet 8 shown in Fig. 2. Then the secondary transistor winding of the inverter 5c and the EHC 6 form the second power subnet 8. Thus, the inverter 5c may provide the second supply voltage directly to the EHC 6, without making use of an energy storage capacity of the capacitor 9, similar to the first embodiment shown in Fig. 1.

Thus, as illustrated in view of Figs. 1 and 2, the invention has the effect that a single power supply network 1 can be used in the vehicle to power electrical loads having supply voltage demands different from each other. Low-voltage applications in hybrid electric vehicles, like the EHC 6, may accordingly be powered from the usually already provided high-voltage power supply network 1.

While some exemplaric embodiments of the invention are shown and described above, it should be understood that the invention is not limited to these embodiments. Furthermore, it should be understood that features given in the embodiments may be combined between different embodiments. Furthermore, all of the features mentioned in the description above may be combined so as to create new embodiments as long as these features are not mutually exclusive.

## Claims

1. A power supply network (1) for installation in a vehicle, wherein the power supply network (1) is arranged to provide a first supply voltage so as to power electrical loads electrically connected to the power supply network with the first supply voltage,
**characterized in that**
the power supply network (1) is arranged to power an electric load (6) which is configured to be powered with a second supply voltage smaller than the first supply voltage.

2. The power supply network (1) according to claim 1, **characterized in that** the power supply network (1) comprises a converter arrangement (5) arranged to convert the first supply voltage to the second supply voltage.

3. The power supply network (1) according to claim 2, **characterized in that** the power supply network (1) comprises a first power subnet (7) arranged to provide the first supply voltage and a second power subnet (8) arranged to provide the second supply voltage, the first power subnet (7) and the second power subnet (8) being operationally connected to each other via the converter arrangement (5), wherein the converter arrangement (5) comprises an inverter (5c) so as to convert the first supply voltage to the second supply voltage.

4. The power supply network (1) according to claim 3, **characterized in that** the inverter (5c) is configured to control the conversion from the first supply voltage to the second supply voltage.

5. The power supply network (1) according to any of the claims 3 or 4, **characterized in that** the power supply network (1) comprises a capacitor (9), the capacitor (9) being arranged to be charged from the first power subnet (7) and being arranged to provide the second supply voltage to the second power subnet (8).

6. The power supply network (1) according to any of the previous claims, **characterized in that** the first supply voltage is 350 VDC and the second supply voltage is between 10 VDC and 50 VDC.

7. The power supply network (1) according to any of the previous claims, **characterized in that** the power supply network (1) comprises an electrically heated catalyst (6) configured to be powered with the second supply voltage.

8. A vehicle, **characterized in that** the vehicle comprises a power supply network (1) according to any of the previous claims operationally connected to the vehicle.

9. The vehicle according to claim 8, **characterized in that** the power supply network (1) comprises a first power subnet (7) arranged to provide the first supply voltage and a second power subnet (8) arranged to provide the second supply voltage, the first power subnet (7) and the second power subnet (8) being operationally connected to each other via a converter arrangement (5), wherein the converter arrangement (5) comprises an inverter (5c) so as to convert the first supply voltage to the second supply voltage.

10. The vehicle according to claim 8 or 9, **characterized in that** the vehicle is a hybrid electric vehicle and comprises an electrically heated catalyst (6) configured to be powered with the second supply voltage.
